(19) **Europäisches Patentamt**

**European Patent Office**

**Office européen des brevets**

(11) **EP 0 858 194 A1**

(12) **EUROPÄISCHE PATENTANMELDUNG**

(43) Veröffentlichungstag:
**12.08.1998 Patentblatt 1998/33**

(51) Int. Cl.⁶: **H04L 25/02**

(21) Anmeldenummer: **97102094.6**

(22) Anmeldetag: **10.02.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(71) Anmelder:
**SIEMENS AKTIENGESELLSCHAFT**
**80333 München (DE)**

(72) Erfinder:
**Zierhut, Hermann, Dipl.-Ing.**
**93073 Neutraubling (DE)**

(54) **Verfahren und Busankoppler zum übertragerloser Ankoppeln einer Teilnehmerstation an einem Bus**

(57) Verfahren zum Ankoppeln einer Teilnehmerstation (4) an einem Bus (5,6) eines Bussystems, der Information und Energie für die Bordnetze von Teilnehmerstationen (4) führt, wobei mit Aktivimpuls (1) und Ausgleichsimpuls bei der Informationsübertragung gearbeitet wird, die im Vergleich zueinander positive und negative Flächen einschließen.

Es ist vorgesehen, daß der Ausgleichsimpuls (3) in seinem Verlauf kürzer als nach einer e-Funktion (2) zum Ausschwingen gebracht wird.

FIG 1

EP 0 858 194 A1

**Beschreibung**

Die Erfindung bezieht sich zunächst auf ein verfahren zum Ankoppeln einer Teilnehmerstation an einem Bus eines Bussystems, der Information und Energie für die Bordnetze von Teilnehmerstationen führt. Hierbei wird mit Aktivimpuls und Ausgleichsimpuls bei der Informationsübertragung gearbeitet, im einzelnen nach Gattungsbegriff von Patentanspruch 1. Bei offenen, also nicht durch angepaßte Widerstände abgeschlossenen Bussystemen, wird die Übertragungsreichweite und die Qualität der Übertragung durch Ausgleichsimpulse verbessert. Bei übertragerlosen Busankopplern hat man sich bisher bemüht, den Entmagnetisierungsstrom eines Übertragers elektronisch nachzubilden.

Die Erfindung bezieht sich weiter auf einen Busankoppler zum übertragerlosen Ankoppeln einer Teilnehmerstation an einem Bus.

Der Erfindung liegt die Aufgabe zugrunde, ein Verfahren und eine Einrichtung zu entwickeln, wonach die Übertragungseigenschaft, insbesondere Übertragungsreichweite und Qualität, noch wesentlich verbessert wird.

Die Lösung der geschilderten Aufgabe erfolgt nach der Erfindung durch ein Verfahren nach Patentanspruch 1. Der Ausgleichsimpuls wird hiernach in seinem Verlauf kürzer als nach einer e-Funktion zum Ausschwingen gebracht. Die Lösung der geschilderten Aufgabe erfolgt weiter durch einen Busankoppler nach Patentanspruch 5. Hiernach wird ein zum Busanschluß des Busankopplers der Wirkung nach parallel geschalteter Impedanz-Generator von einem Rechner in Abhängigkeit von Zeitdauer und Amplitude des Aktivimpulses derart angesteuert, daß der Ausgleichsimpuls in seinem Verlauf kurzer als nach einer e- Funktion ausschwingt.

Das Verfahren und der Busankoppler weisen die Vorteile auf, daß die Übertragungseigenschaften eines Bussystems noch wesentlich verbessert werden, daß also die Übertragungsreichweite bzw. die Übertragungsqualität deutlich verbessert wird. Dadurch kann man andererseits auch mehr Teilnehmerstationen anschließen. Aktivimpuls und Ausgleichsimpuls in der Informationsübertragung auf den Bus können im Vergleich zueinander als positive und negative Flächen verstanden werden. Es ist günstig, wenn der Ausgleichsimpuls in seiner hinsichtlich des Aktivimpulses negativen Fläche kleiner gehalten ist als die Gesamtfläche des Aktivimpulses. Es ist auch vorteilhaft, wenn der Ausgleichsimpuls nach einer Cosinusfunktion zum Auschwingen gebracht wird, da diese Funktion sich leicht realisieren laßt. Man kann auch den Ausgleichsimpuls nach einer gaußschen Kurve zum Ausschwingen bringen.

Beim Busankoppler kann der Impedanz-Generator vorteilhaft ein vom Rechner angesteuerter Sender sein. Hierdurch wird in einfacher Weise der Ausgleichsimpuls realisiert.

Es ist günstig, wenn der Busankoppler vorteilhafte Verfahren realisiert. Insbesondere kann der Busankoppler dafür eingerichtet sein, daß der Ausgleichsimpuls weniger als 90 % des Aktivimpulses beträgt. Insbesondere ist es günstig, wenn der Ausgleichsimpuls 60 bis 90 % des Aktivimpulses ausmacht. Man erzielt dadurch eine wünschenswerte Dämpfung, um störende Rückwirkungen zu vermeiden.

Die Erfindung soll nun anhand von in der Zeichnung grob schematisch wiedergegebenen Ausführungsbeispielen näher erläutert werden:

In FIG 1 ist ein Diagramm für die Ströme mit Aktivimpuls und Ausgleichsimpulsen wiedergegeben.

In FIG 2 ist ein Prinzipaufbau für einen Busankoppler veranschaulicht.

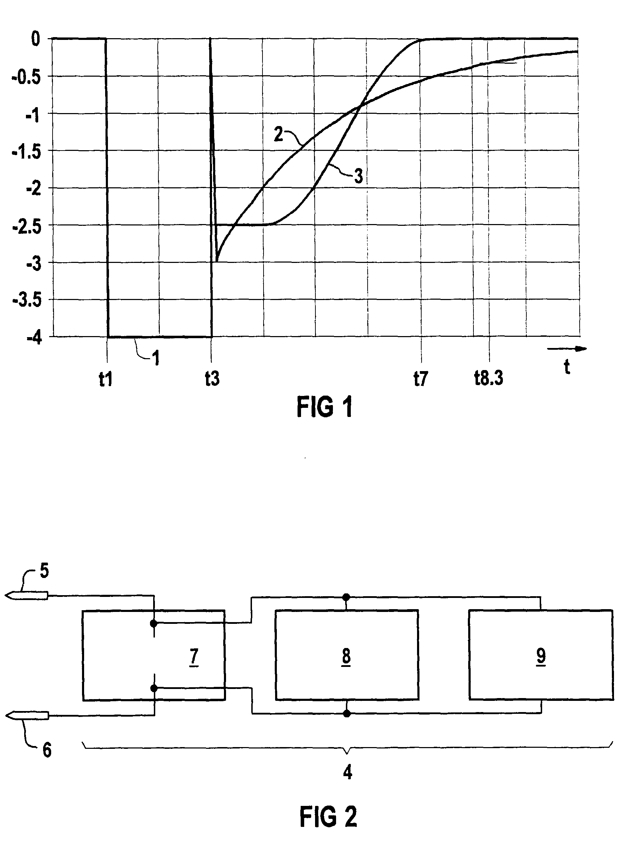

Im Diagramm nach FIG 1 ist auf der Abszisse die Zeit und auf der Ordinate normiert der Sendestrom aufgetragen. Auch die Abszisse bzw. X-Achse ist mit einem relativen, also normierten Zeitmaßstab versehen. Da die Sendestromamplitude des Aktivimpulses 1 auf den Bus spannungsreduzierend bezuglich der Gleichspannung für die Bordnetzversorgung wirkt, ist der Strom aller nicht sendenden Teilnehmerstationen negativ, da ein kleiner werdender Strom einem negativen Stromwert entspricht. Üblicherweise würde der Ausgleichsimpuls 2 im wesentlichen nach einer e-Funktion 2 verlaufen. Hier ist vorgesehen, daß der Ausgleichsimpuls kürzer als nach einer e-Funktion ausschwingt, also beispielsweise ein Ausgleichsimpuls 3 gebildet wird. Der Aktivimpuls beginnt zu einer Zeit T1 und endet bei T3. Bei T3 beginnt der Ausgleichsimpuls 3, der in etwa bei T7 ausgeschwungen ist. Zu einer Zeit T8,5/T8,3 kann beispielsweise der nächste Aktivimpuls einsetzen.

Die Übertragungsreichweite bei einem offenen Bussystem, beispielsweise beim EIB der European Installation Bus Association, ist in der Praxis durch die Schwellenspannung der Receiver der Teilnehmerstationen und durch den Ausgleichsimpuls mit seinem Ausschwingverhalten gegeben. Bei einem Ausschwingen nach e-Funktion ist die Systemausschwingzeitkonstante Tau gegeben durch die im System vorhandenen Induktivitaten L, Kapazitäten C und Widerstände R. Tau folgt dann der Beziehung Tau = L/R bzw. Tau = RxC.

Durch den vorgesehenen Ausgleichsimpuls ist frühzeitig sichergestellt, daß ein nachfolgender Aktivimpuls nicht durch eine Restspannung des Ausgleichsimpulses, beispielsweise zu einer Zeit T8,3 im Diagramm, beeinträchtigt wird.

Eine Restamplitude des Ausgleichsimpulses würde eine Restladung bedeuten, die an einem Receiver die wirksame Spannungsamplitude eines folgenden Aktivimpulses reduzieren würde. Im Ausführungsbeispiel würde zum Zeitpunkt T8,3 ein folgender Aktivimpuls in seiner Spannung um etwa 0,4 V geschwächt. Wenn man annimmt, daß die Einschaltschwelle eines Receivers 0,5 V beträgt, müßte die Mindestamplitude des Aktivimpulses bei diesem Vergleichssystem 0,9 V sein. Hieraus kann man eine Systemreichweite Rsys errechnen gemäß

$$Rsys = 20\log(6/0,9) = 16\ [db].$$

Wenn die angenommene Restspannung von 0,4 V entfällt, ergibt sich eine Systemreichweite Rsys gemäß

$$Rsys = 20\log(6/0,5) = 21\ [db].$$

Ein Gewinn von

$$21\ [db] - 16\ [db] = 5\ [db]$$

entspricht der Erhöhung der maximalen Übertragungsreichweite eines Systems gegenüber dem Vergleichssystem in der Größenordnung von 45 %. Anders betrachtet könnte man bei gleicher Übertragungsreichweite etwa 70 % mehr Teilnehmerstationen vorsehen.

In FIG 2 ist ein Ausführungsbeispiel für einen prinzipiellen Aufbau eines Busankopplers veranschaulicht:

Die Teilnehmerstation 4 wird an einem Bus mit den Leitern 5 und 6 angeschlossen. An einer Teilnehmerschaltung 7, die einer sonst üblichen Teilnehmerstation entsprechen kann, sind zur Beeinflussung des Ausgleichsimpulses an der entsprechenden Ausgleichsschaltung ein Impedanz-Generator 8 und ein Rechner 9 angeschlossen. Der Impedanz-Generator 8 kann als ein vom Rechner angesteuerter Sender verstanden werden. Dem Busanschluß des Busankopplers ist der Wirkung nach der Impedanz-Generator 8 parallel geschaltet. Der Impedanz-Generator 8 wird vom Rechner 9 in Abhängigkeit von Zeitdauer und Amplitude des Aktivimpulses derart gesteuert, daß der Ausgleichsimpuls in seinem Verlauf kurzer als nach einer e-Funktion ausschwingt. Vorteilhafterweise kann der Rechner zusätzlich dafür eingerichtet sein, den Ausgleichsimpuls in seiner hinsichtlich des Aktivimpulses negativen Fläche kleiner als die Gesamtfläche des Aktivimpulses zu halten. Dadurch werden unerwünschte Rückwirkungen im System vermieden bzw. gedämpft. Es hat sich als günstig erwiesen, wenn der Ausgleichsimpuls weniger als 90 % des Aktivimpulses beträgt. Vorteilhafterweise liegt der Ausgleichsimpuls in einem Bereich von 60 bis 90 %.

Der Rechner kann insbesondere dafür ausgelegt und eingerichtet sein, den Impedanz-Generator 8 derart anzusteuern, daß der Ausgleichsimpuls nach einer Cosinusfunktion ausschwingt oder nach einer gaußschen Kurve.

## Patentansprüche

1. Verfahren zum Ankoppeln einer Teilnehmerstation (4) an einem Bus (5,6) eines Bussystems, der Information und Energie für die Bordnetze von Teilnehmerstationen (4) führt, wobei mit Aktivimpuls (1) und Ausgleichsimpuls bei der Informationsübertragung gearbeitet wird, die im Vergleich zueinander positive und negative Flächen einschließen, **dadurch gekennzeichnet,** daß der Ausgleichsimpuls (3) in seinem Verlauf kürzer als nach einer e-Funktion (2) zum Ausschwingen gebracht wird.

2. Verfahren nach Anspruch 1, **dadurch gekennzeichnet,** daß der Ausgleichsimpuls (3) in seiner hinsichtlich des Aktivimpulses (1) negativen Fläche kleiner gehalten ist als die Gesamtfläche des Aktivimpulses (1).

3. Verfahren nach Anspruch 1 oder 2, **dadurch gekennzeichnet,** daß der Ausgleichsimpuls (3) nach einer Cosinusfunktion zum Ausschwingen gebracht wird.

4. Verfahren nach Anspruch 1 oder 2, **dadurch gekennzeichnet,** daß der Ausgleichsimpuls (3) nach einer gaußschen Kurve zum Ausschwingen gebracht wird.

5. Busankoppler zum Ankoppeln einer Teilnehmerstation (4) an einem Bus eines Bussystems, der Information und Energie für die Bordnetze von Teilnehmerstationen (4) führt, der mit Aktivimpuls (1) und Ausgleichsimpuls bei der Informationsübertragung arbeitet, wobei Aktivimpuls (1) und Ausgleichsimpuls im Vergleich zueinander positive und negative Flächen einschließen, **dadurch gekennzeichnet,** daß ein zum Busanschluß des Busankopplers (4) der Wirkung nach parallel geschalteter Impedanz-Generator (8) von einem Rechner (9) in Abhängigkeit von Zeitdauer und Amplitude des Aktivimpulses (1) derart angesteuert ist, daß der Ausgleichsimpuls (3) in seinem Verlauf kürzer als nach einer e-Funktion ausschwingt.

6. Busankoppler nach Anspruch 5, **dadurch gekennzeichnet,** daß der Impedanz-Generator (8) ein vom Rechner (9) angesteuerter Sender ist.

7. Busankoppler nach Anspruch 5 oder 6, **dadurch gekennzeichnet,** daß der Rechner (9) dafür eingerichtet ist, den Ausgleichsimpuls (3) in seiner hinsichtlich des Aktivimpulses (1) negativen Fläche kleiner ist als die Gesamtfläche des Aktivimpulses (1).

8. Busankoppler nach Anspruch 7, **dadurch gekennzeichnet,** daß der Ausgleichsimpuls (3) weniger als 90 % des Aktivimpulses (1) beträgt.

9. Busankoppler nach Anspruch 8,
   **dadurch gekennzeichnet,**
   daß der Rechner (9) den Impedanz-Generator (8) bzw. den Sender derart steuert, daß der Ausgleichsimpuls (3) nach einer Cosinusfunktion ausschwingt.

10. Busankoppler nach Anspruch 8,
    **dadurch gekennzeichnet,**
    daß der Rechner (9) den Impedanz-Generator (8) bzw. den Sender derart steuert, daß der Ausgleichsimpuls (3) nach einer gaußschen Kurve ausschwingt.

**FIG 1**

**FIG 2**

Europäisches
Patentamt

## EUROPÄISCHER RECHERCHENBERICHT

Nummer der Anmeldung

EP 97 10 2094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 428 975 A (FUJITSU) 29.Mai 1991<br>* Zusammenfassung; Abbildungen 5,9,14,15 *<br>* Spalte 3, Zeile 47 - Zeile 49 *<br>* Spalte 4, Zeile 29 - Zeile 40 *<br>--- | 1,2,5-8 | H04L25/02 |
| X | EP 0 724 345 A (ALCATEL BELL) 31.Juli 1996<br>* Zusammenfassung; Abbildungen 2,3 *<br>* Spalte 1, Zeile 43 - Zeile 52 *<br>* Spalte 1, Zeile 56 - Spalte 2, Zeile 15 *<br>* Spalte 5, Zeile 3 - Zeile 8 *<br>* Spalte 7, Zeile 27 - Zeile 29 *<br>--- | 1,2,5-8 | |
| X | US 4 121 118 A (MIYAZAKI) 17.Oktober 1978<br>* Abbildung 1 *<br>* Spalte 3, Zeile 12 - Zeile 18 *<br>* Spalte 3, Zeile 37 - Zeile 46 *<br>--- | 1,2,5-8 | |
| A | US 5 012 384 A (CHEW) 30.April 1991<br>* Zusammenfassung; Abbildung 6 *<br>* Spalte 1, Zeile 43 - Zeile 51 *<br>* Spalte 1, Zeile 63 - Spalte 2, Zeile 9 *<br>--- | 1,2,5-8 | RECHERCHIERTE SACHGEBIETE (Int.Cl.6) |
| A | WO 96 31012 A (SIEMENS; ZIERHUT) 3.Oktober 1996<br>* Zusammenfassung *<br>----- | 1,5 | H04L |

Der vorliegende Recherchenbericht wurde für alle Patentansprüche erstellt

| Recherchenort | Abschlußdatum der Recherche | Prüfer |
|---|---|---|
| DEN HAAG | 4.Juli 1997 | Scriven, P |

EPO FORM 1503 03.82 (P04C03)